# EUROPEAN PATENT APPLICATION

(11) **EP 3 685 790 A1**
(43) Date of publication of application: **29.07.2020**
(21) Application number: 19153670.5
(22) Date of filing: 25.01.2019
(51) Int. Cl.: A61C 5/62, A61C 5/66, B05C 17/005, A46B 11/00, A46D 1/00, A46D 3/00

(54) **CAPSULE FOR HIGH VISCOSITY COMPOUNDS, PISTON FOR A USAGE WITH A CAPSULE AND SYSTEM COMPRISING A CAPSULE AND A PISTON**

(71) Applicant: Sulzer Mixpac AG, 9469 Haag (Rheintal) (CH)
(72) Inventor: Tiekenheinrich, Lars, 24147 Kiel (DE)
(74) Representative: Manitz Finsterwald Patent- und Rechtsanwaltspartnerschaft mbB

(57) **Abstract**

The present invention relates to a capsule for high viscosity compounds with a housing, the housing comprising a storage section with a storage volume for a storage of the compound and an application section with an application channel for an application of the compound, wherein the filling end of the storage volume is placed at a filling opening of the housing and is accessible from outside of the housing for a filling of the storage volume with the compound, wherein the application end of the application channel is placed at an application opening of the housing and is accessible from outside of the housing for an application of the compound. Further, the present invention relates to a piston for a usage with such a capsule, to a system comprising such a capsule and preferably such as piston and to a method of providing a capsule.

## Description

The present invention relates to a capsule for high viscosity compounds, in particular compounds with a viscosity between water and honey, preferably for dental compounds, with a housing, the housing comprising a storage section with a storage volume for a storage of the compound and an application section with an application channel for an application of the compound, wherein the storage volume comprises a filling end and a discharging end and the application channel comprises a storage end and an application end, wherein the storage volume comprises an essentially cylindrical middle section located between the filling end and the discharging end to provide a piston guide for a piston inserted into the storage volume, wherein the discharging end of the storage volume and the storage end of the application channel are connected in a fluid communicating way, wherein the filling end of the storage volume is placed at a filling opening of this housing and is accessible from outside of the housing for a filling of the storage volume with the compound, wherein the application end of the application channel is placed at an application opening of the housing and is accessible from outside of the housing for an application of the compound. Further, the present invention relates to a piston for a usage with such a capsule, wherein the piston is adapted to be inserted into the storage volume, and wherein a compound in the storage volume is forceable into the application channel by a movement of the piston in the storage volume towards the application end of the storage volume. In addition, the present invention is related to a system comprising such a capsule and preferably such a piston.

Capsules are commonly used for storage and application of compounds of various viscosities. Capsules often comprise a storage volume, wherein the compound in question can be stored. A piston inserted into the capsule, especially into the storage volume of the capsule, can be used to force the compound into and/or through an application channel of the capsule for an application of the compound. Especially dental compounds can be stored in and applicated by such capsules. A system comprising a capsule and a piston for instance can be inserted into a respective composite gun, wherein the composite gun can actuate the piston and therefore trigger the actual application procedure.

Especially for high viscosity compounds a planar application of the compound is favorable. To achieve this, it is known to provide specially formed brush tips as additional attachments for application sections of capsules. For the planar application, these additional attachments have to be connected to the application opening of the housing of the capsules in an additional manufacturing step. Further, sealing issues at the transition from the capsule to the additional attachment often cannot be avoided

In view of the above, it is an object of the present invention to provide an improved capsule, an improved piston and an improved system, which do not have the aforementioned drawbacks of the state of the art. In particular, it is an object of the present invention to provide a capsule, a piston and a system for high viscosity compounds, which allow and provide an improved planar application of the high viscosity compound in an easy and cost efficient way.

This object is satisfied by the patent claims. In particular, this object is satisfied by a capsule for high viscosity compounds according to claim 1, by a piston for a usage with a capsule according claim 11, by a system comprising a capsule and piston according to claim 13 and by a method for producing a capsule according to claim 15. The dependent claims describe preferred embodiments of the invention.

Details and advantages described with respect to a capsule according to the first aspect of the invention are also refer to a piston according to the second aspect of the invention and to a system according to the third aspect of the invention and vice versa, if of technical sense.

According to a first aspect of the invention, the object is satisfied by a capsule for high viscosity compounds, in particular compounds with a viscosity between water and honey, preferably for dental compounds, with a housing, the housing comprising a storage section with a storage volume for a storage of the compound and an application section with an application channel for an application of the compound, wherein the storage volume comprises a filling end and a discharging end and the application channel comprises a storage end and an application end, wherein the storage volume comprises an essentially cylindrical middle section located between the filling end and the discharging end to provide a piston guide for a piston inserted into the storage volume, wherein the discharging end of the storage volume and the storage end of the application channel are connected in a fluid communicating way, wherein the filling end of the storage volume is placed at a filing opening of the housing and is accessible from outside of the housing for a filling of the storage volume with the compound, wherein the application end of the application channel is placed at an application opening of the housing and is accessible from outside of the housing for an application of the compound. A capsule according to the invention is characterized in that the application section comprises a brush tip at the application end of the application channel.

A capsule according to the invention can be used for a storage and/or application of especially high viscosity compounds, in particular compounds with a viscosity between water and honey, especially honey-like compounds, preferably dental compounds. The respective compound can be filled into a storage volume through a filling opening of the housing of the capsule. The storage volume is located in a storage section of the capsule, wherein the storage volume comprises a filling end at the filling opening of the housing. The main part of the storage volume is a middle section of the storage volume, which is preferably essentially cylindrically shaped. This cylindrical shape allows a guidance of a piston within the storage volume, essentially beginning at the filling end of the storage volume towards a discharging end of the storage volume.

Connected to the discharging end of the storage volume in a fluid communicating way is a storage end of an application channel of an application section of the housing of the capsule. The compound can be forced by a movement of the piston via the discharging end of the storage volume into the storage end of the application channel, through the application channel and out of an application end of the application channel. This application end of the application channel placed at an application opening of the housing, preferably the application end is essentially identical to the application opening of the housing. An application of the compound stored in the storage volume of the capsule via an application opening, for instance onto a tooth of a patient, can therefore be provided.

According to the invention, the application section of the capsule comprises a brush tip at the application end of the application channel. In other words, the brush tip is a part, preferably an intrinsic part, of the application section. Therefore, the application section of the capsule according to the invention itself can provide a planar application of the high viscosity compound. Especially, an additional step to attach an attachment comprising a brush separate from the capsule is not necessary. The high viscosity compound leaves the capsule according to the invention through the application end of the application channel and is spread onto a target surface in a planar way by the brush tip. Providing a planar application of the high viscosity compound onto a target surface can therefore be simplified.

Further, a capsule according to the invention can be characterized in that a material of the brush tip is softer than a material of the housing. The brush tip is used to applicate the high viscosity compound onto the target surface. This procedure often includes a direct physical contact of the brush tip and the target surface. By using a soft material for the brush tip, especially a material softer as the material used for housing, a certain flexibility of the brush tip can be provided and therefore harming of the target surface can be prohibited. In addition, a soft material of the brush tip can allow a certain deformation of the brush tip upon contact with the target surface. The size of the planar application provided by the brush tip can therefore be easily adjusted. In contrary to that, the housing should be more rigid and especially not easily deformable. By composing the housing out of a material harder than the brush tip, this rigidness of the housing can easily be provided.

Additionally, a capsule according to the invention can be improved by that the material of the brush tip has a hardness measured with the Shore A Durometer selected in the range of 20A to 95A and up to a hardness measured with the Shore D Durometer of 55D, preferably in the range of 20A to 50A. This wide range of softness allows to choose a brush tip according to the respective requirements. Softer brush tips, especially with a hardness measured with the Shore A Durometer selected in the range of 20A to 50A, can be used for delicate surfaces, for instance a tooth of a patient. Alternatively or additionally, a housing of the capsule, especially the storage section of the capsule, has a hardness measured with the Shore A Durometer selected in the range of 25A to 95A and up to a hardness measured with the Shore D Durometer of 75D, preferably in the range of 70A to 75D. This wide range of more rigid material allows to choose a housing, especially a storage section of the housing, according to the respective requirements. Especially, rigid and durable housings can be provided.

Especially, a capsule according to the invention can be characterized in that the brush tip is composed of a thermoplastic elastomer (TPE), in particular a medical grade TPE, and/or an ethylene vinyl acetate (EVA), in particular a medical grade ethylene vinyl acetate (EVA), with a hardness measured with the Shore A Durometer from 20A to 95A and up to a hardness measured with the Shore D Durometer of 55D, preferably in the range of 20A to 50A, and/or the housing is composed of medical grade thermoplastic elastomer (TPE) and/or medical grade ethylene vinyl acetate (EVA).. Typical examples of soft materials, especially soft plastic materials, are TPE (thermoplastic elastomers or thermoplastic rubbers) and EVA (ethylene vinyl acetate). TPE and EVA typically have a hardness measured on the "A" scale from 20 Shore "A" to 95 Shore "A", with some harder TPE materials, i.e. materials harder than 90 Shore "A" typically being measured on the "D" scale up to a hardness of 55D. Further, by using medical grade thermoplastic elastomer and/or medial grade ethylene vinyl acetate as material for the brush tip, an interaction between the material of the brush tip and the compound applicated by the brush tip volume can be avoided. As already described above, a capsule according to the invention is often used for dental compounds. Therefore it is necessary that also a reaction between the material of the capsule, especially the material of the storage volume, and the compound filled into and/or stored in the storage volume can be prohibited. By using medical grade thermoplastic elastomer and/or medial grade ethylene vinyl acetate as material for the housing, such an interaction between the material of the housing and the compound stored in the storage volume can be avoided.

Further, in a preferred embodiment of the invention, a capsule according to the invention can be characterized in that the housing and the brush tip are produced in a 2-component injection molding process. In a 2-component injection molding process, two, preferably different, materials are used during the molding, either simultaneously or consecutively. As a result, a single component can be produced, wherein different sections of this component can be made up of different materials. For an example, a brush tip made up of a softer material can be combined with a housing made up of a more rigid material. Additionally, a secure fixing of the brush tip on the housing can easily be provided, for instance due to grooves and/or undercuts in the housing filled with material of the brush tip during an injection molding process of the brush tip onto the housing. Further on, 2-component molding is a fast, easy and cost efficient production method.

Further, a capsule according to the invention can be characterized in that the application section comprises application sealing means for providing a sealing of the application channel, preferably placed at and/or near the application end of the application channel. In particular, the application sealing means encloses the brush tip at least partly, preferably completely. As described above, a capsule according to the invention comprises a continuous channel, starting at the filling end of the storage volume, continuing by the fluidly connected discharging end of the storage volume and storage end of the application channel and ending at the application end of the application channel. Closing means, for instance a piston, can be inserted into the filling opening of the housing to provide a sealing of the filling opening. By providing application sealing means at the application section, preferably placed at and/or near the application end of the application channel, a sealing of the second end of the aforementioned continuous channel within the capsule according to the invention can be provided. A prevention of a leaking out and/or a contamination of the compound stored in the storage volume of the capsule can therefore be improved.

A capsule according to the invention can further be improved by that the application sealing means comprise at least one of the following items:
- welding seem
- heat sealing
- cap
- plug
- foil cover.

This list is open and also other items can be used for application sealing means if these make technical sense. Especially, an application sealing means adapted to the embodiment of the application end of the application channel and/or the brush tip can be chosen.

Further, a capsule according to the invention can be improved by that the foil cover comprises a multi-component foil. In such a multi-component foil, different foil elements with different features can be combined into a single multi-component foil. Each of the foil elements of the multi-component foil can provide different and especially specialized features. For instance, one of the components can be light-proof, another component can be tight, especially vapor tight, and, preferably the innermost component which will be in contact with the application opening and/or the brush tip, can be of a medical grade. Therefore, especially a foil cover adapted to the compound stored in the storage volume of the capsule can be provided.

Preferably, a capsule according to the invention can be improved by that the application sealing means, in particular the cap and/or the plug and/or the foil cover, are at least partly made of polybutylene terephthalate (PBT) and/or at least partly made of cyclic olefin polymer (COP), in particular of cyclic olefin copolymer (COC). Polybutylene terephthalate, cyclic olefin polymer and/or cyclic olefin copolymers are especially easy to handle and can easily be produced in several shapes and adapted to the special needs of the respective application sealing means. Therefore these materials are especially preferred to be used as materials of at least parts of the application sealing means.

In another embodiment of a capsule according to the invention, the capsule can be characterized in that the storage volume comprises a cardinal volume orientation and the application channel comprises a cardinal channel orientation, and wherein the cardinal volume orientation angles the cardinal channel orientation at an angle between 10 degree and 60 degree. In other words, a direction of the application channel present at the application end of the application channel is preferably different to the direction of the storage volume present at its filling end. This allows during an application of a compound using a capsule according to the invention to reach target surfaces with the brush tip which otherwise, especially with completely aligned cardinal orientations of the storage volume and the application channel, are impossible to be reached. Especially for dental compounds this allows to easily reach all or at least essentially all areas within a mouth of a patient.

The brush tip may comprise a plurality of bristles, optionally with the brush tip respectively the plurality of bristles having an outer diameter of less than 4 mm, preferably an outer diameter selected in the range of 1 to 3 mm, especially of 1.5 to 2.5 mm; and/or optionally with the brush tip respectively the plurality of bristles having a length projecting from the application end of the application channel selected in the range of 1.5 to 10 mm, preferably of 2 to 7 mm and especially of 3 to 6 mm; and/or optionally with each bristle of the plurality of bristles having a diameter selected in the range of 0.01 to 1 mm, especially of 0.05 to 0.5 mm; and/or optionally with the plurality of bristles comprising between 4 and 150 bristles. The size and number of each bristle of the plurality of bristles is typically selected in dependence on the precise application, with lesser bristles being selected for higher viscosity components than for low viscosity components that may be stored in the capsule.

According to a second aspect of the invention, the object is satisfied by a piston for a usage with a capsule according to the first aspect of the invention, wherein the piston is adapted to be inserted into the storage volume, and wherein a compound in the storage volume is forceable into the application channel by a movement of the piston in the storage volume towards the application end of the storage volume.

A piston according to the second aspect of the invention is intended to be used in and/or with a capsule according to the first aspect of the invention. Therefore a piston according to the second aspect of the invention can provide all features and advantages already described in detail with respect to a capsule according to the first aspect of the invention.

As a piston according to the second aspect of the invention can be used in and/or within a capsule according to the first aspect of the invention, in other words the storage volume of the capsule forms a piston guide to guide the piston according to the second aspect of the invention within the storage volume. A movement of the piston through the storage volume from the filling end of the storage volume towards the discharging end of the storage volume forces a compound stored in the storage volume through the discharging end of the storage volume via the storage end of the application channel into the application channel and later on out of the application end of the application channel for an application of the compound using the brush tip of the capsule. The movement of the piston within the storage volume of the capsule can for instance be actuated by a standard composite gun.

Further, a piston according to the invention can be characterized in that the piston is at least partly made of polybutylene terephthalate (PBT) and/or at least partly made of cyclic olefin polymer (COP), in particular of cyclic olefin copolymer (COC). As already mentioned above, these particular materials are easy to handle and can be provided easily in different shapes.

In a third aspect of the invention, the object is satisfied by a system comprising a capsule and a piston, wherein the capsule is provided according to the first aspect of the invention and preferably the piston is provided according to the second aspect of the invention. By providing a capsule according to the first aspect of the invention and/or a piston according to the second aspect of the invention, a system according to the third aspect of the invention can provide all features and advantages which are described above in detail according to a capsule according to the first aspect of the invention and/or a piston according to the second aspect of the invention.

Further, a system according to the invention can be characterized in that the storage volume of the capsule contains a high viscosity compound, in particular a compound with a viscosity between water and honey, preferably a dental compound, wherein the filling opening of the housing is sealingly closed by the piston. As a system according to the third aspect of the invention comprises a capsule according to the first aspect of the invention, a brush tip is comprised at the application end of the housing of the capsule. The high viscosity compound, in particular the compound with a viscosity between water and honey, preferably the dental compound, can therefore be applicated easily in a planar way. By sealingly closing the filling end of the storage volume and/or the filling opening of the housing, a leaking of the compound out of the system and/or a contamination of the compound already filled into the capsule of the system can be prohibited.

In a forth aspect of the invention, the object is satisfied by a method of producing a capsule with a brush tip, preferably a capsule in accordance with the first aspect of the invention, the method comprising the steps of:
- providing a mold for the brush tip of the capsule and injection molding the brush tip in situ;
- providing a mold for the remnants of the capsule with the molded brush tip in situ and injection molding the capsule from a material different from the brush tip.

A method according to the forth aspect of the invention is preferably intended to provide a capsule according to the first aspect of the invention. Therefore, in this preferred embodiment, a method according to the forth aspect of the invention can provide all features and advantages already described in detail with respect to a capsule according to the first aspect of the invention.

A method according to the invention is used for producing capsules with a brush tip. Essentially, the capsule including the brush tip is produced using a molding process. For the brush tip and the remaining parts of the capsule, different materials are used. Preferably, the brush tip is molded from a softer material than the remnants of the capsule, especially a storage section and/or an application section of the housing of the capsule. Therefore, a method according to the invention essentially comprises a 2-component molding process.

According to a first step of a method according to the invention, a mold is provided for the brush tip and subsequently the brush tip is injection molded using this brush tip mold. In other words, after the first step the brush tip of the capsule can already be provided.

In a second step of a method according to the invention, a mold is provided for the remnants of the capsule, wherein especially in this capsule mold the already molded brush tip is inserted. Subsequently, the remaining parts of the capsule are injection molded, wherein a material different of the brush tip is used. During this second molding process, the material of the remnant of the capsule preferably at least partly encloses the brush tip and/or connects to the material of the brush tip to provide a secure and/or resistant interconnection of these two parts of the capsule produced in a method according to the invention.

In the second step, different molds can be used for molding of the brush tip and of the remnants of the capsule, respectively. Alternatively, also a single mold can be used, wherein this single mold is internally changed between the two steps of a method according to the invention, for instance by moving and/or removing of spacers in this single mold.

The method according to the invention is described with respect to a production of a single capsule. Apparently, the method according to the invention can easily be adapted to produce two or more capsules with brush tips simultaneously.

Within the scope of the present invention, the order of the two steps of a method according to the invention can be swapped. In other words, a method according to the invention can alternatively comprise the steps of:
- providing a mold for the remnants of the capsule without the brush tip of and injection molding the remnants of the capsule in situ;
- providing a mold for brush tip with the molded remnants of the capsule in situ and injection molding the brush tip from a material different from the remnants of the capsule.

All features and advantages described above are also valid for this swapped version of the method according to the invention, wherein references to the brush tip and the remnants of the capsule, respectively, are accordingly swapped. Also in this embodiment of a method according to the invention, preferably the material used to mold the brush tip is softer than the material used to mold the remaining parts of the capsule.

The present invention is further described hereinafter with reference to illustrated embodiments shown in the accompanying drawings.

There is shown:
- Fig. 1: a sectional view of a system according to the invention, and
- Fig. 2: an isometric view of a system according to the invention.

Elements of the same function are specified throughout the figures with the same reference signs. In the following, any statement made having regard to the direction of a component is made relative to the position in the drawing and can naturally wherein the actual position. The description of the accompanying drawing is only by the way of detail. Specific features of each aspect of the present invention and of the figures can be combined with each other if of technical sense.

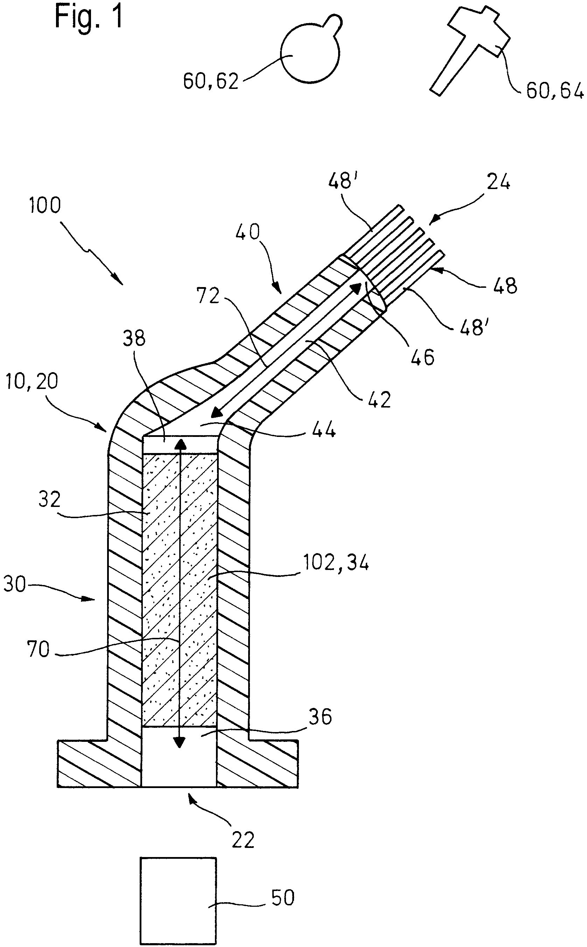

Fig. 1 shows a system 100 according to the present invention in a sectional view. The system 100 at least comprises a capsule 10 according to the invention and, as shown in Fig. 1, preferably also a piston 50 according to the invention. The system 100, especially the capsule 10, is used to store and to applicate compounds 102, especially high viscosity compounds 102, preferably compounds 102 for dental applications. These compounds 102 can be stored in a storage volume 32 of a storage section 30.

The storage section 30 is part of the housing 20 of the capsule 10. The compound 102 is stored in an essentially cylindrical middle section 34 of the storage volume 32. For a filing of the storage volume 32, a filling opening 22 in the housing 20 and respectively a filling end 36 of the storage volume 32 is used. The compound 102 is inserted into the storage volume 32 and can fill the storage volume 32 essentially from is its filling end 36 up to its discharging end 38.

The discharging end 38 of the storage volume is connected to a storage end 44 of an application channel 42 of a capsule 10 in a fluid communication way. The application channel 42 is located in an application section 40 of the housing 20 of the capsule 10. For instance by a movement of the piston 50 in the storage volume 32 along a cardinal volume orientation 70 towards the discharging end 38 of the storage volume 32, the compound 102 is forced in direction to the discharging end 38 and into the application channel 42. In the application channel 42 the compound 102 is guided to an application end 46 of the application channel 42 and a respective application opening 24 of the housing 20 of the capsule 10. An application of the compound 102 can therefore be easily provided. Preferably, a cardinal volume orientation 70 of the storage volume 32 and a cardinal channel orientation 72 of the application channel 42 are arranged at an angle between 10° and 60° to allow an application of the compound 102 at regions otherwise not reachable.

According to the invention, the application section 40 of the housing 20 comprises a brush tip 48 at the application end 44 of the application channel 42. In other words, the brush tip 48 is a part, preferably an intrinsic part, of the housing 20 of the capsule 10. A planar application of the compound 102 can therefore be provided more easily. Preferably, a material of the brush tip 48 is softer than a material of the housing. For instance, the material of the brush tip 48 has a hardness measured with the Shore A Durometer selected in the range of 20A to 95A and up to a hardness measured with the Shore D Durometer of 55D, preferably in the range of 20A to 50A. By this, a planar application of the compound 102 stored in the storage volume 32 of the capsule 10 can be provided easily.

Especially, the housing 20 and the brush tip 48 can be produced in a 2-component injection molding process, a fast, easy and cost efficient production method. For an example, a brush tip 48 made up of a softer material can be combined with a housing 20 made up of a more rigid material. Additionally, a secure fixing of the brush tip 48 on the housing 20, for instance due to grooves and/or undercuts of the housing 20 filled with material of the brush 48 tip during the injection molding process, can easily be provided.

Preferably, in a first step of a method of producing a capsule (10) according to the invention, a mold is provided for the brush tip (48) and subsequently the brush tip (48) is injection molded using this brush tip mold. In other words, after the first step the brush tip (48) of the capsule (10) can already be provided.

In a second step of a method of producing a capsule (10) according to the invention, a mold is provided for the remnants of the capsule (10), wherein especially in this capsule mold the already molded brush tip (48) is inserted. Subsequently, the remaining parts of the capsule (10) are injection molded, wherein a material different of the brush tip (48) is used. During this second molding process, the material of the remnant of the capsule (10) preferably at least partly encloses the brush tip (48) and/or connects to the material of the brush tip (48) to provide a secure and/or resistant interconnection of these two parts of the capsule (10) produced in a method according to the invention.

Preferably, at least the housing 20 and/or the brush tip 48 are composed of medical grade TPE and/or medical grade EVA. For a sealing of the application end 46, the application opening 52 and/or the brush tip 48, respectively, an application sealing means 60 can be provided, for instance and as shown in Fig. 1, a foil cover 62 or a foil cover 64. Preferably, the foil cover 62 can comprise a multi-component foil. Especially, the application sealing means 60 can be at least partly made of PBT and/or COP and/or COC.

The brush tip 48 shown in Fig. 1 is composed of a plurality of bristles 48' that extend from the application end 44 of the application channel 42.

As shown in Fig. 1, a piston 50 can be used as a closing means to sealingly close the filling opening 22 of the housing 20. Preferably, the piston 50 itself comprises sealing means, for instance a circumferential sealing surface, to engage an inner surface of the storage volume 32 to provide the sealing. Also the piston 50 can be at least partly made of PBT, COP and/or COC.

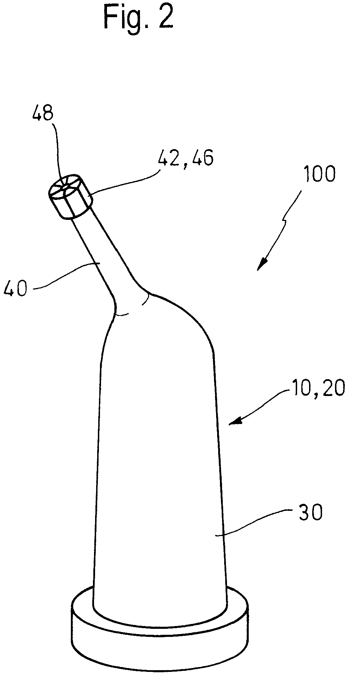

In Fig. 2 an isometric view of a system 100 according to the invention is shown. Within the housing 20 of the capsule 10, especially within the storage section 30, a storage volume 32 and additionally a compound 102 (both not shown) are located.

At one end of the housing 20 of the capsule 10, an application section 40 is visible, wherein a brush tip 48 is comprised at an application end 46 of an application channel 42. This brush tip 48 as part of the housing 20 of the capsule 10 according to the invention allows a planar application of the compound 102 stored in the storage volume 32 in an especially easy and comfortable way.

### Reference list

- 10: capsule

- 20: housing
- 22: filling opening
- 24: application opening

- 30: storage section
- 32: storage volume
- 34: middle section
- 36: filling end
- 38: discharging end

- 40: application section
- 42: application channel
- 44: storage end
- 46: application end
- 48: brush tip
- 48': bristle

- 50: piston

- 60: application sealing means
- 62: foil cover
- 64: plug

- 70: volume orientation
- 72: channel orientation

- 100: system
- 102: compound

## Claims

1. Capsule (10) for high viscosity compounds (102), in particular compounds (102) with a viscosity between water and honey, preferably for dental compounds, with a housing (20),
the housing (20) comprising a storage section (30) with a storage volume (32) for a storage of the compound (102) and an application section (40) with an application channel (42) for an application of the compound (102), wherein the storage volume (32) comprises a filling end (36) and a discharging end (38) and the application channel (42) comprises a storage end (44) and an application end (44),
wherein the storage volume (32) comprises an essentially cylindrical middle section (34) positioned between the filling end (36) and the discharging end (38) to provide a piston guide for a piston (50) inserted into the storage volume (32),
wherein the discharging end (38) of the storage volume (32) and the storage end (44) of the application channel (42) are connected in a fluid communicating way,
wherein the filling end (36) of the storage volume (32) is placed at a filling opening (22) of the housing (20) and is accessible from outside of the housing (20) for a filling of the storage volume (32) with the compound (102), wherein the application end (44) of the application channel (42) is placed at an application opening (24) of the housing (20) and is accessible from outside of the housing (20) for an application of the compound (102), **characterized in that**
the application section (40) comprises a brush tip (48) at the application end (44) of the application channel (42).

2. The capsule (10) of claim 1, wherein a material of the brush tip (48) is softer than a material of the housing (20).

3. The capsule (10) of claim 1 or 2, wherein the material of the brush tip (48) has a hardness measured with the Shore A Durometer selected in the range of 20A to 95A and up to a hardness measured with the Shore D Durometer of 55D, preferably in the range of 20A to 50A.

4. The capsule (10) of one of the preceding claims, wherein the brush tip (48) is composed of a thermoplastic elastomer (TPE), in particular a medical grade TPE, and/or an ethylene vinyl acetate (EVA), in particular a medical grade ethylene vinyl acetate (EVA), with a hardness measured with the Shore A Durometer from 20A to 95A and up to a hardness measured with the Shore D Durometer of 55D, preferably in the range of 20A to 50A, and/or the housing is composed of medical grade thermoplastic elastomer (TPE) and/or medical grade ethylene vinyl acetate (EVA).

5. The capsule (10) of one of the preceding claims, wherein the housing (20) and the brush tip (48) are produced in a 2-component injection molding process.

6. The capsule (10) of one of the preceding claims, wherein the application section (40) comprises application sealing means (60) for providing a sealing of the application channel (42), preferably placed at and/or near the application end (44) of the application channel (42).

7. The capsule (10) of claim 6, wherein the application sealing means (60) comprise at least one of the following items:
- welding seam
- heat sealing
- cap
- plug
- foil cover.

8. The capsule (10) of claim 7, wherein the foil cover comprises a multicomponent foil.

9. The capsule (10) of one of the preceding claims 6 to 8, wherein the application sealing means (60), in particular the cap and/or the plug and/or the foil cover, is at least partly made of Polybutylene terephthalate (PBT) and/or at least partly made of a cyclic olefin polymers (COP), in particular of a Cyclic olefin copolymer (COC).

10. The capsule (10) of one of the preceding claims, wherein the storage volume (32) comprises a cardinal volume orientation (70) and the application channel (42) comprises a cardinal channel orientation (72), and wherein the cardinal volume orientation (70) angles the cardinal channel orientation (72) in an angle between 10° and 60°; and/or
wherein the brush tip (48) comprises a plurality of bristles (48'), optionally wherein
the brush tip (48) respectively the plurality of bristles (48') have an outer diameter of less than 4 mm, preferably an outer diameter selected in the range of 1 to 3 mm, especially of 1.5 to 2.5 mm; and/or
the brush tip (48) respectively the plurality of bristles (48') have a length projecting from the application end (44) of the application channel (42) selected in the range of 1.5 to 10 mm, preferably of 2 to 7 mm and especially of 3 to 6 mm; and/or
each bristle (48') of the plurality of bristles (48') has a diameter selected in the range of 0.01 to 1 mm, especially of 0.05 to 0.5 mm; and/or
the plurality of bristles (48') comprises between 4 and 150 bristles (48').

11. Piston (50) for a usage with a capsule (10) according to one of the preceding claims, wherein the piston (50) is adapted to be inserted into the storage volume (32), and wherein a compound (102) in the storage volume (32) is forceable into the application channel (42) by a movement of the piston (50) in the storage volume (32) towards the application end (44) of the storage volume (32).

12. The piston (50) according to claim 11, wherein the piston (50) is at least partly made of Polybutylene terephthalate (PBT) and/or at least partly made of a cyclic olefin polymers (COP), in particular of a Cyclic olefin copolymer (COC).

13. System (100) comprising a capsule (10) and a piston (50), wherein the capsule (10) is provided according to one of the preceding claims 1 to 10 and preferably the piston (50) is provided according to one of the preceding claims 11 or 12.

14. System (100) according to claim 13, wherein the storage volume (32) of the capsule (10) contains a high viscosity compound (102), in particular a compound (102) with a viscosity between water and honey, preferably a dental compound (102), wherein in particular the filling end (36) of the storage volume (32) and/or the filling opening (22) of the housing (20) are sealingly closed by the piston (60).

15. A method of producing a capsule (10) with a brush tip (48), preferably a capsule (10) in accordance with one of the preceding claims 1 to 10, the method comprising the steps of:
- providing a mold for the brush tip (48) of the capsule (10) and injection molding the brush tip (48) in situ;
- providing a mold for the remnants of the capsule (10) with the molded brush tip (48) in situ and injection molding the capsule (10) from a material different from the brush tip (48).
